# EUROPEAN PATENT APPLICATION

(11) **EP 2 657 891 A2**
(43) Date of publication of application: **30.10.2013**
(21) Application number: 13164814.9
(22) Date of filing: 23.04.2013
(51) Int. Cl.: G06K 19/077, G08B 13/24, G09F 3/00

(54) **Attachment member and attachment tool thereof**

(30) Priority: 26.04.2012 JP 2012100890
(71) Applicant: Toska-Bano'k Co. Ltd., Tokyo Tokyo (JP)
(72) Inventor: Toyohisa, Hiroki, Chiba-shi, Chiba (JP)
(74) Representative: Hano, Christian

(57) **Abstract**

An attachment member (1) comprises a receiving portion (3) having an insertion hole (4) formed therein and including a locking portion (4a, 4b), an inserting portion (10) having an engaging portion to be inserted into the insertion hole of the receiving portion and engaging with the locking portion to establish a locking state, and a filament portion (2) integrally connecting the receiving portion to the inserting portion, an IC chip (6) being mounted in a holding portion (7) of the attachment member (1), the holding portion (7) being of a hard material along a portion of the filament portion (2).

## Description

### BACKGROUND OF THE INVENTION

### 1. Field of the Invention

The present invention relates to an attachment member used for various commodities as targets and for the purpose of attaching a brand tag or a tag showing the quality or the price of a commodity or for the purpose of coupling or combining a plurality of targets, and to an attachment tool for sequentially attaching each attachment member to the target when such attachment members are manufactured as an assembly.

### 2. Description of the Related Art

Tag attachment members or band members having a variety of arrangements have conventionally been formed of various materials and have been provided for the abovementioned purposes. Commodities having those attachment members attached thereto are supplied to demanders from production sites or manufacture factories through distribution channels, and this process often employs electronic tags for managing the commodities, often provided with IC chips having data written thereto to allow reading and checking of the contents in a non-contact manner. The IC chips need to be mounted separately from filament members, and the mounting operation requires time and effort, which reduces efficiency. In addition, no functions are provided for monitoring and checking illegal acquisition including crimes such as shoplifting, and various countermeasures need to be taken for security.

US 5,631,631 discloses a member in which a filament includes a paddle having a display portion formed integrally on one end and includes a T-shaped bar formed integrally on the other end for locking to a target, wherein a chip is embedded in the T-shaped bar portion. An attachment member shown in this arrangement is provided with a short and separable coupling rod outside the T-shaped bar, and a plurality of attachment members are arranged in parallel on a runner bar as an assembly. For attachment to a target, a needle having a slit formed therein is inserted and a piston pushes the T-shaped bar beyond the target. At this point, the short coupling rod is cut by a cutter and the filament is released from the slit of the needle.

To perform the operation, the T-shaped bar is forcedly deformed at the time of the passage through the needle and the chip is also distorted. In addition, the T-shaped bar is extremely thin, which makes it quite difficult to perform the step of embedding the chip, and which is not practical.

The problems to be solved by the present invention are as follows: The conventional attachment member only has the simple coupling effect, and the IC chip having the information data for managing the commodity needs to be mounted separately as required, which presents burdensome operation with much time and effort. No integration is provided for the IC chip in the attachment member, which would result in excellent usability and prevent the possibility of damage; furthermore, no function is provided for monitoring illegal acquisition.

### SUMMARY OF THE INVENTION

To solve the problems, an attachment member according to the present invention is characterized by configurations described in the appended claims, and each desired form is described in the dependent claims.

According to an aspect, the present invention provides an attachment tool for the attachment member on which an assembly of attachment members are placed in parallel at regular intervals on a runner member to be cuttable, the attachment tool sequentially attaching the attachment members to a target one by one, the attachment member including a receiving portion having an insertion hole formed therein and including a locking portion, an inserting portion having an engaging portion to be inserted into the insertion hole of the receiving portion and engaging with the locking portion to establish a locking state, and a filament portion integrally connecting the receiving portion to the inserting portion, an IC chip being mounted in a portion of the attachment member, in which the attachment member includes a holding portion formed of a hard material along a portion of the filament portion, and the IC chip is mounted in the holding portion, a reader/writer associated with the IC chip of the attachment member being provided for a portion of a body of the attachment tool, wherein an operation switch in response to trigger operation is placed, the reader/writer is connected electrically to an antenna, and the reader/writer is connected electrically to the switch.

The attachment member according to the present invention is configured as described above. Thus, the operation of attaching the attachment member can be simply performed to attach the IC chip for commodity management to the commodity simultaneously, which saves the time and effort of a plurality of attachment operations. Since the IC chip is placed in the hard material portion of the attachment member, the IC chip is resistant to deformation and impact and suffers no damage. The IC chip is provided with the antenna for wireless transmission and reception, and the transmission/reception state can be improved by adding a conductive material for the antenna to the fiber portion. Since the core is made of the conductive, particularly amorphous, material, the passage through a gate with a magnetic field causes a reaction to allow monitoring and sensing of illegal acquisition. In addition, the antenna of the IC chip can be brought closer to the amorphous core to achieve stable holding.

With the attachment tool for the attachment member according to the present invention, the switch can be provided for the grip portion to facilitate the operation of the reader/writer at hand.

### BRIEF DESCRIPTION OF THE DRAWINGS

Fig. 1 is a plan view partially showing a first embodiment of an attachment member according to the present invention.
Fig. 2 is a partial side view.
Fig. 3 is a front view showing a holding portion.
Fig. 4 is a section view showing a filament portion.
Fig. 5 is a partially cutaway plan view showing a second embodiment of the attachment member.
Fig. 6 is a partially cutaway side view.
Fig. 7 is a partially cutaway side view showing another example.
Fig. 8 is a plan view showing an assembly.
Fig. 9 is a side view showing an attachment tool for the attachment member.
Fig. 10 is a diagram showing a reader/writer substrate.
Fig. 11 is a diagram showing a third embodiment of the present invention.
Fig. 12 is a diagram showing a use state.
Fig. 13 is a diagram showing a fourth embodiment.
Fig. 14 is a side view.
Fig. 15 is a diagram showing a tag to be used.
Fig. 16 is a diagram showing a fifth embodiment.
Fig. 17 shows a modification.
Fig. 18 is a diagram showing a sixth embodiment.
Fig. 19 shows a modification.
Fig. 20 is a diagram showing a seventh embodiment.
Fig. 21 is a diagram showing an assembly state.
Fig. 22 is a diagram showing an assembly in which yarn is used for the filament portion.
Fig. 23 is a side view.
Fig. 24 is a diagram showing the attachment tool.
Fig. 25 is a diagram showing the attachment member to which the tag is coupled.
Fig. 26 is a diagram showing the attachment member in which a receiving portion is placed in the center of the filament portion.
Fig. 27 is a diagram showing the attachment member in which an IC chip and an antenna member are placed on the tag.

### DETAILED DESCRIPTION OF THE INVENTION

The present invention is realized as shown in the accompanying drawings and as described in the embodiments.

### Embodiment 1

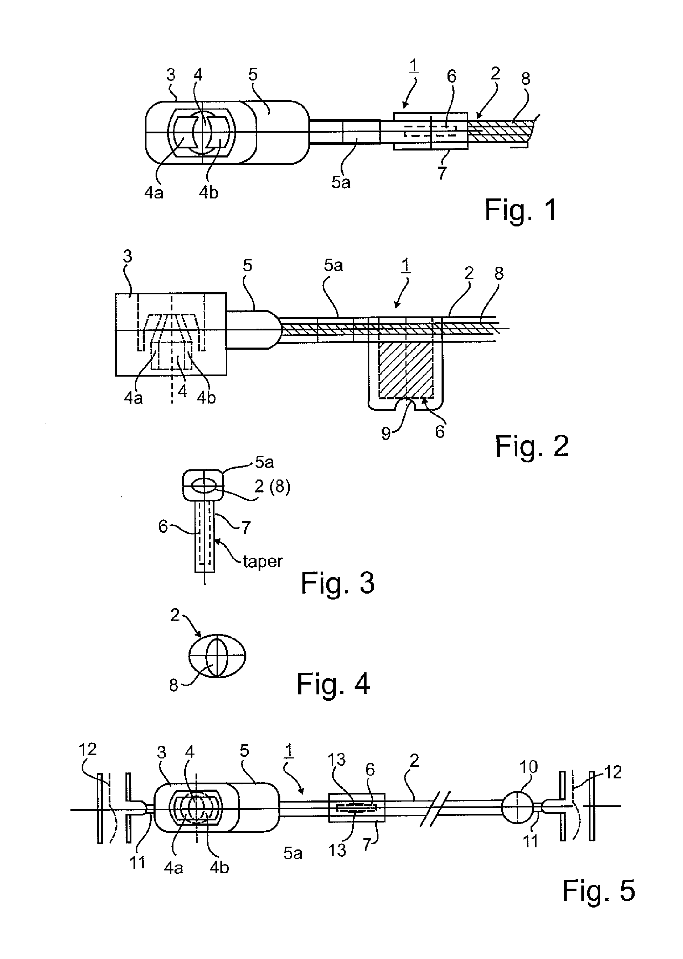

Next, a first embodiment of an attachment member according to the present invention will be described with reference to Fig. 1 to Fig. 4. In these figures, reference numeral 1 shows an attachment body, reference numeral 2 shows a filament portion forming a loop, and reference numeral 3 shows a receiving portion secured to one end of the filament portion 2 and made of hard plastic. The receiving portion 3 has an insertion hole 4 formed therein which receives an inserting portion, not shown, provided on the other end of the filament 2. The insertion hole 4 has locking portions 4a and 4b formed therein with elasticity to engage and lock an engaging portion of the inserting portion.

A protruding portion 5 made of the same material as that of the receiving portion 3 is formed on the receiving portion 3 closer to the filament portion 2. A holding portion 7 for an IC chip 6 is formed from the protruding portion 5 by extending the same material. In other words, the filament portion 2 is formed such that the outer periphery thereof is covered as a cover portion 5a with the same hard plastic as that of the receiving portion 3 from the protruding portion 5 to the holding portion 7.

The filament portion 2 has a core 8 made of a conductive, particularly amorphous, material in the center. The core 8 has a generally oval cross section and its side is covered with a cover material such as plastic and nylon. The core 8 has an end in a longer axis direction of the generally oval shape exposed to the outside. The core 8 also serves as an antenna in radio transmission and reception for the IC chip 6. The presence of the amorphous core 8 can exert a magnetic field to correspond to a gate for monitoring and sensing illegal acquisition.

The holding portion 7 described above has a generally rectangular shape and has the IC chip contained (embedded) therein. The holding portion 7 has an edge on a free end partially notched to form a pressing portion 9 raised such that the IC chip 6 inside is brought closer to the core 8. In this case, the antenna of the IC chip 6 itself may be brought closer to the core 8 to provide a favorable communication state, and the core 8 may be used as the antenna to increase the effective distance of radio waves.

### Embodiment 2

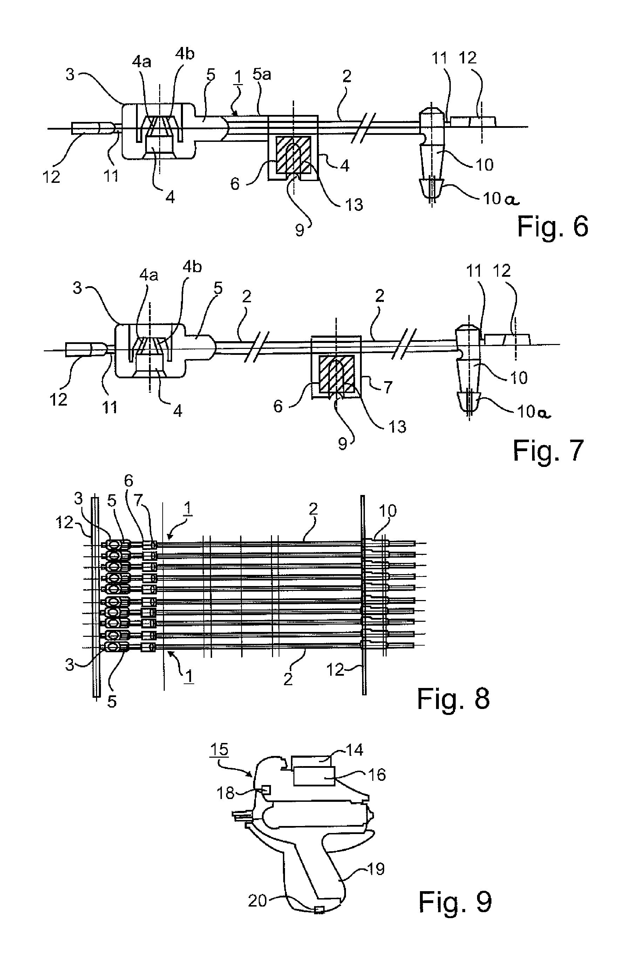

Next, a second embodiment of the attachment member according to the present invention will be described with reference to Fig. 5 and Fig. 6. Components identical to those in the first embodiment are designated with the same reference numerals, and detailed description thereof is omitted. In Fig. 5 and Fig. 6, reference numeral 10 shows an inserting portion provided at the other end of the filament portion 2 and made of hard plastic. The inserting portion 10 has an engaging portion 10a formed at a position closer to a leading end that engages with the locking portions 4a and 4b of the receiving portion 3 to lock the loop state of the filament portion 2.

Fig. 5 and Fig. 6 show part of the attachment member 1 in an assembled state. Each of the receiving portion 3 and the inserting portion 10 is coupled to runner members 12 and 12 movable within an attachment tool, later described, through short coupling portions 11 and 11 cut by a cutter provided for the attachment tool at the time of attachment.

The holding portion 7 of the IC chip 6 in the second embodiment has not only the pressing portion 9 but also a pair of holding pieces 13 and 13 for bringing the edge of the IC chip 6 along the axial direction of the core 8, thereby holding and positioning the IC chip 6 to prevent distortion resulting in twist or inclination.

As shown in Fig. 7, the holding portion 7 having the pair of holding pieces 13 and 13 formed thereon may be placed at a position near the center of the filament portion 2 independently of the receiving portion 3 and the inserting portion 10.

The assembly of the attachment members 1, 1... is as shown in Fig. 8. To obtain the optimal length of the core 8 made of the conductive, particularly amorphous, material as an antenna, the filament portions 2, 2... are warped in a mold by using a block, so that even a small mold can provide a length longer than itself.

Reference numeral 15 shown in Fig. 9 shows the attachment tool for loading the attachment members 1, 1 ... as the assembly and attaching the attachment members 1, 1 ... to targets one by one. While the attachment tool 15 has been known of mechanisms and effects, a reader/writer substrate for the IC chip 6, particularly a substrate 16 for RFID of a UHF band, is mounted in part of the apparatus body, in part of a body case in the present embodiment. The reader/writer substrate 16 is supplied with power from a battery 17. An antenna 18 for transmitting and receiving signals to and from the reader/writer 16 is also provided in part of the body case. A switch 20 for input to a microcontrol unit 21 mounted on the reader/writer substrate 16 is provided in part of a grip 19 of the attachment tool, at a position closer to an end. The switch 20 may be associated with trigger movements and is installed at an arbitrary position.

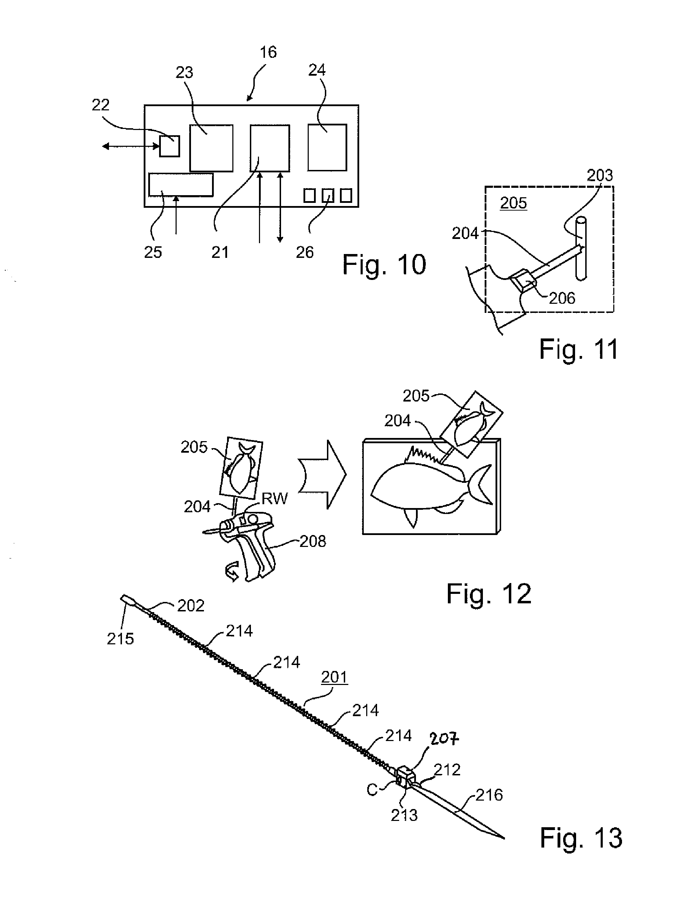

The reader/writer substrate 16 has an arrangement as shown in Fig. 10. A signal from the antenna 18 is input to and amplified in an amplifier 22. The signal is input to an LSI 23 for reader/writer. The LSI 23 is controlled by the microcontrol unit 21. Reference numeral 24 shows a module, reference numeral 25 shows a power input portion which receives the power from the battery 17, and reference numeral 26 shows an LED which shows the operation status.

### Embodiment 3

Next, a third embodiment according to the present invention will be described with reference to Fig. 11 and Fig. 12. In the figures, reference numeral 204 shows a linear filament portion made of plastic. The filament portion 204 has a T-shaped bar 203 formed integrally on one end for locking to a target. The T-shaped bar 203 is connected to a runner bar, not shown, by a short pin-shaped coupling member on its outer face, and a plurality thereof are collected at regular intervals into an assembly.

The filament portion 204 has a coupling portion 206 of a brand tag 205 formed integrally on the other end. The coupling portion 206 has the brand tag 205 attached thereto in the assembled state, and has a flat hexagonal shape which is forced at an angle of approximately 45 degrees with respect to the axis core of the T-shaped bar 203 or the runner bar to prevent occupation of large space without being bulky. A holding portion slit for the brand tag 205 is formed at that angle.

The coupling portion 206 is made of hard plastic and has an IC chip C mounted on a portion thereof. The IC chip has the input data about a commodity as a target (living fish in the embodiment), that is, DNA, catch site, and other management data. The mounting can be performed in various methods including not only embedding but also sticking and coating of a surface and direct printing to the coupling portion 206.

A conductive antenna member A is embedded in the filament portion 204 described above to assist the communication function of the IC chip C. The embedding of the antenna member A and the mounting of the IC chip C are incorporated as a step in manufacturing the assembly of the attachment member.

The attachment members having the brand tags 205 formed integrally as the assembly are attached one by one to the targets by loading the runner bar on the attachment tool 208. The attachment tool 208 has a needle having a slit formed therein. The needle is inserted into the target (basal muscle of a dorsal fin of the fish in this case) and the T-shaped bar 203 is pressed by a piston member to perform the attachment. At this point, the filament portion 204 is released by the slit of the needle. The operation can be performed more smoothly when a reader/writer WR for writing or reading the data of the IC chip C is mounted on part of the attachment tool 208.

### Embodiment 4

Next, a fourth embodiment is described with reference to Fig. 13 to Fig. 15. In Fig. 13 to Fig. 15, reference numeral 201 shows a filament portion in the present embodiment. The filament portion 201 has a receiving portion 213 formed integrally on one end that has an insertion hole 207 formed therein and an inserting portion 202 formed integrally on the other end that is inserted into the insertion hole 207 to form a loop of the filament portion 201. The inserting portion 202 and the receiving portion 213 are at least made of hard plastic.

The filament portion 201 has continuously formed cones 214, 214... having gradually reduced diameters toward the inserting portion 202. The inserting portion 202 is inserted into the insertion hole 207 and is drawn to allow free adjustment of the diameter of the loop of the filament portion 201 and to provide a lock portion for preventing return. An end 215 of the inserting portion 202 has a pair of slits formed therein that are opposite to each other at positions of 180 degrees. The slits can reduce the diameter of the end 215 to facilitate the insertion into the insertion hole 207.

The IC chip C is mounted on an outer face of the receiving portion 213 described above, and the mounting method is similar to that described above. The receiving portion 213 has a front end face having an integrally formed attachment portion 212 for a tag 216 at an angle of approximately 45 degrees with respect to the front end face. The tag 216 has a piece 141 for attachment formed integrally on a base end, and the piece 141 has a pin hole 151 formed therein. A shaping material of the attachment portion 12 is passed through the pin hole 151 to achieve the integration to prevent removal of the tag 216.

### Embodiment 5

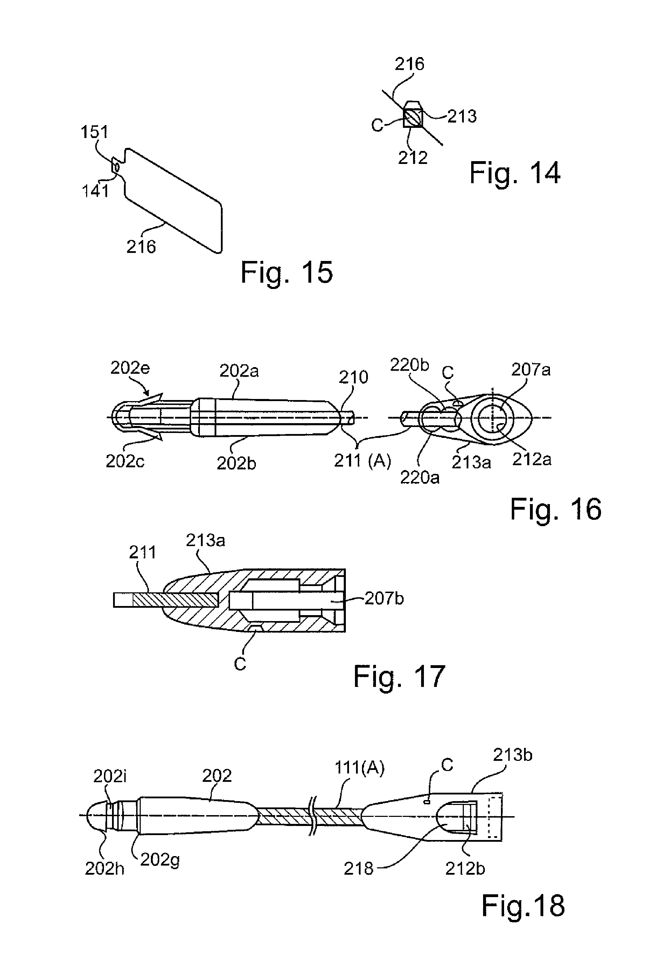

Next, a fifth embodiment will be described with reference to Fig. 16 and Fig. 17. In those figures, reference numeral 210 shows an attachment member according to the fifth embodiment, and reference numeral 211 shows a linear filament portion formed of plastic. The filament portion 211 has one end provided with a receiving portion 213a including an insertion hole 207a having a locking portion 212a formed in its inner face. The coupling of the receiving portion 213a to the filament portion 211 is performed by engagement at a core ball 220 provided at an end of the filament portion 211. In this case, the core ball 220 is formed of a first core ball 220a and a second core ball 220b. The IC chip C is mounted on part of the receiving portion 213a, and the mounting method is similar to those described above.

The filament 211 has the other end provided with an inserting portion 202a inserted into the insertion hole 207a of the receiving portion 213a to engage with the locking portion 212a to be locked. The inserting portion 202a is provided with a finger catch portion 202b, and an insertable portion 202c to be inserted actually into the insertion hole 207a is formed outside the catch portion 202b. The filament portion 211 passes through the catch portion 202b to reach the insertable portion 202c. A cap cover 202e provided by extending an engaging portion 202d engaging with the locking portion 212a is attached at a lower end in the outside of the insertable portion 202c.

Fig. 17 shows a modification in which the insertion hole 207b of the receiving portion 213a is opened at a rear end face of the receiving portion 213a on a straight line with the axial direction of the filament portion 211. The filament portion 211 is provided by using twisted yarn, and one end thereof is deeply fitted into the front face of the receiving portion 213a and bonded by an adhesive to achieve the integration. The IC chip C is mounted in part of the receiving portion 213a with a method similar to that described above. The filament portion 211 forms the loop similarly to the above. The antenna member A may be incorporated into the filament portion 211 in this case.

### Embodiment 6

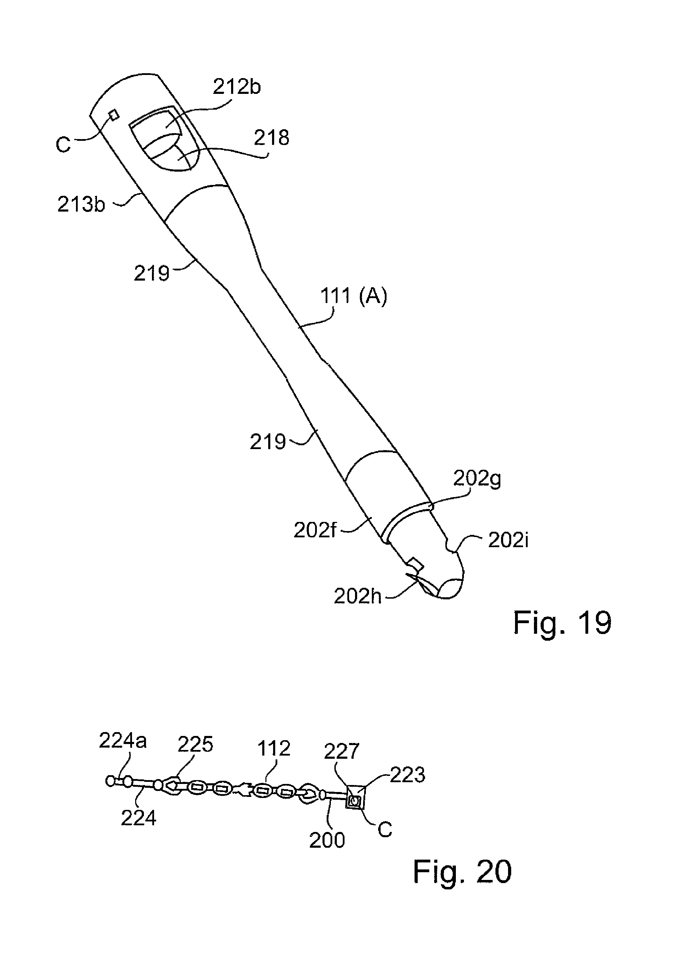

Next, a sixth embodiment will be described with reference to Fig. 18 and Fig. 19. The sixth embodiment is an example in which an elastomer is used as a filament portion 111. The filament portion 111 has a receiving portion 213b integrally formed on one end that has an insertion hole opened at a rear end face. The IC chip C is mounted on part of the receiving portion 213b in a method similar to that described above. The receiving portion 213b has a window hole 218 formed therein to allow visual check of the fitting state of an inserting portion 202f, later described, and a locking portion 212b is formed in the window hole 218.

The filament portion 111 has the inserting portion 202f formed integrally on the other end that is fitted to the insertion hole of the receiving portion 213b to form the loop of the filament portion 111. The inserting portion 202f has a stopper step 202g formed thereon that abuts closely on an opening edge of the insertion hole of the receiving portion 213b, and a leading end portion 202h is formed at the end that has a spherical end face and has an engaging step 202i formed at a base end.

As shown in Fig. 19, the attachment member in the embodiment has the previously formed receiving portion 213b and inserting portion 202f, and the insert portions 219 and 219 are provided at their base portions to allow the integration with the filament portion 111.

### Embodiment 7

Next, a seventh embodiment according to the embodiment will be described with reference to Fig. 20. In the embodiment, a filament portion 112 is provided by using a chain member made of plastic. The filament portion 112 has one end coupled to a ring 221 provided at an end of a coupling rod 200, and a receiving portion 223 having an insertion hole 222 formed therein is coupled integrally with an end portion of the coupling rod 200. The IC chip C is mounted on part of the receiving portion 223 in a method similar to that described above.

The filament portion 112 has the other end coupled to an inserting portion 224 through the ring 225. An insert portion 224a of the inserting portion 224 is inserted into the insertion hole 222 to cause the filament portion 112 to form the loop. A constriction formed in the insert portion 224a engages with the locking portion formed on the inner wall face of the insertion hole 222 to establish a locking state.

### Embodiment 8

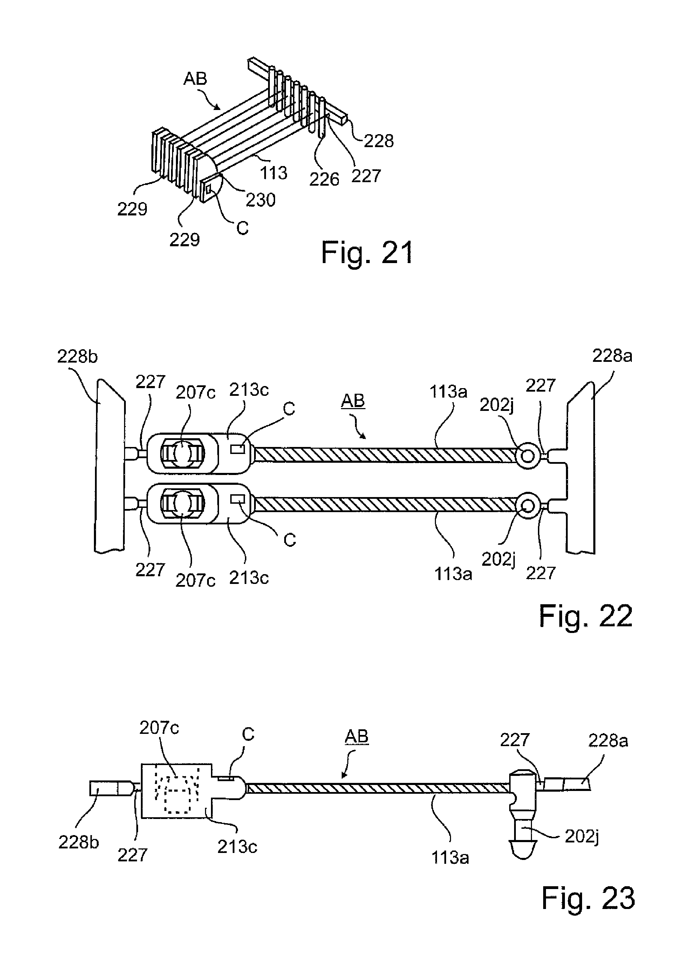

Next, an eighth embodiment will be described with reference to Fig. 21. Fig. 21 shows an assembly AB of a plurality of attachment members. For the attachment member as a single unit, yarn is used as a filament portion 113. The filament portion 113 has a T-shaped bar 226 formed integrally on one end that passes through a target to prevent removal. The T-shaped bar 226 is connected to a runner bar 228 through a short coupling pin 227 at an outer end. The runner bar 228 is mounted on the attachment tool and the attachment members are sequentially attached to targets one by one. At this time, the coupling pin 227 is cut by a cutter provided for the attachment tool to separate the attachment member from the runner bar 228.

The filament portion 113 has a paddle portion 229 for preventing tag removal formed integrally on the other end that hangs the filament portion 113 inserted into a pin hole. The paddle portion 229 is made of hard plastic similar to that of the runner bar 228, and the IC chip C is mounted in part of the paddle portion 229 in a method similar to that described above. To prevent separation of the paddle portion 229 in the state of the assembly AB, a short coupling pin 230 couples the paddle portions 229, 229.... It goes without saying that the coupling pin 230 is also separated at the time of the attachment to the target.

### Embodiment 9

Next, a ninth embodiment according to the present invention will be described with reference to Fig. 22, Fig. 23, and Fig. 24. In this case, the assembly AB of the attachment members using the yarn as the filament portion 113a is shown. In this case, the filament portion 113a has a receiving portion 213c formed on one end with an insertion hole 207c formed therein and an inserting portion 202j formed on the other end that is inserted into the abovementioned insertion hole 207c to form the loop of the filament portion 113a. The receiving portion 213c and the inserting portion 202j described above are integrally coupled to the runner bars 228b and 228a by the short coupling pins 227, 227,... on the outer face. In this case, the IC chip C is mounted on part of the receiving portion 213c in a method similar to that described above.

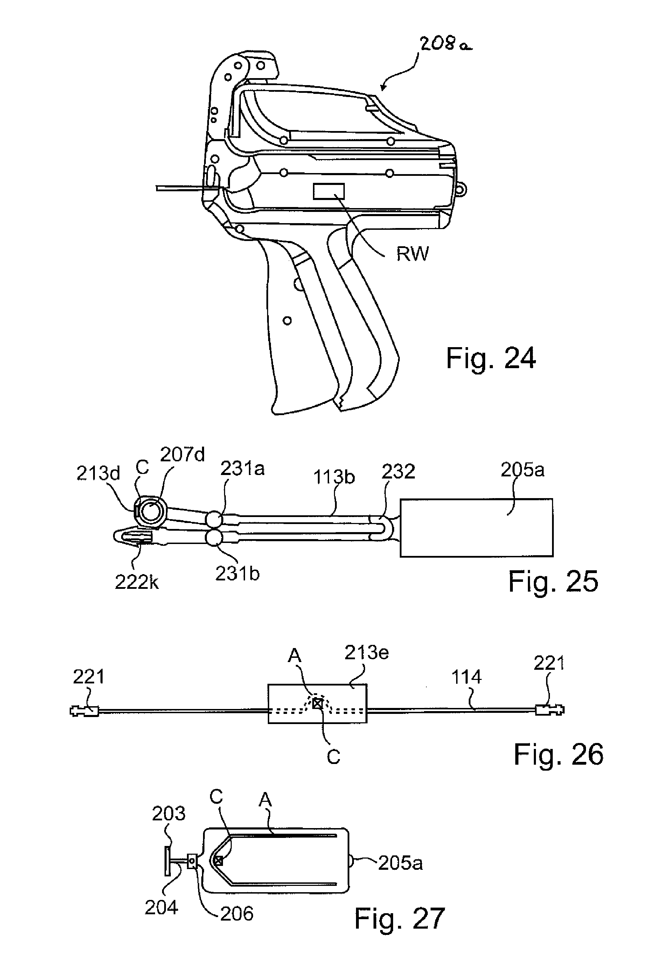

The assembly AB is attached to the target by a dedicated attachment tool 208a shown in Fig. 24. The reader/writer RW associated with the IC chip C is mounted on part of the attachment tool 208a as described above. The attachment tool 208a is provided with a supply path for each of the receiving portion 213c and the inserting portion 202j. The intended loop can be formed by supplying them one by one through the operation of a lever and combining and fitting them. Each of the runner bars 228a and 228b can be set in the attachment tool 208a in the supply state.

### Embodiment 10

Next, a tenth embodiment according to the present invention will be described with reference to Fig. 25. In this case, a filament portion 113b is provided by using yarn and is bent in a U shape at a generally central portion, and the bend portion is positioned by a fixing member 232 made of plastic. It goes without saying that the filament portion 113b is not necessarily one, and two filament portions 113b may be coupled by the fixing member 232.

The filament portion 113b has a receiving portion 213d formed on one end with an insertion hole 207d formed therein. The IC chip C is mounted on the receiving portion 213d in a method similar to that described above. The filament portion 113b has an inserting portion 222k formed on the other end that can be inserted into the abovementioned insertion hole 207d to form the loop of the filament portion 113b. In addition, the inserting portion 222k and the receiving portion 213d are provided with coupling portions 231a and 231b in ball shape at their base ends. Before use, the coupling portions 231a and 231b are point-bonded and integrated to prevent separation of the filament portion 113b.

A tag 205a is previously fixed integrally to the outer end of the abovementioned fixing member 232. The filament portion 113b forms the loop and is attached to the target, so that the tag 205a can be placed on the target.

### Embodiment 11

Next, an eleventh embodiment will be described with reference to Fig. 26. In this case, a filament portion 114 has inserting portions 221 and 221 formed on both ends that are made of a hard material. The filament portion 114 has an insertion hole at a generally central position on each end face in parallel with the filament portion 114. Each of the inserting portions 221 and 221 can be inserted into and fixed to the insertion holes to form two loops.

The IC chip C is mounted at a generally central portion on the side of the receiving portion 213e in a method similar to that described above. The filament portion 114 within the receiving portion 213e serves as the antenna member A having a metal component, and the antenna member A is bent to surround the position of the IC chip C.

### Embodiment 12

Next, a twelfth embodiment will be described with reference to Fig. 27. The twelfth embodiment is a modification of the third embodiment, in which the coupling portion 206 does not need to force the angle particularly. The filament portion 204 has the T-shaped bar 203 formed on one end and has the coupling portion 206 formed on the other end. The tag 205a is integrally fixed to the coupling portion 206. The tag 205a is assumed to be made of a hard material, and the IC chip C is mounted on part thereof in a method similar to that described above.

Reference symbol A shows the antenna member. In this embodiment, the antenna member A has a generally U shape and a long dimension and is formed to surround the IC chip at a bend portion corresponding to the central portion.

The attachment member, the manufacture method thereof, and the attachment tool in the present embodiments are configured as described above. While the attachment member is formed to include the amorphous core surrounded by the coating, yarn may be wound on the surface of the core. In addition, the reader/writer substrate 16 may be one for a band other than the UHF band.

The attachment member according to the present invention is configured as described above. While the third embodiment has shown the arrangement in which the antenna member A is embedded in the filament portion 204, the antenna member A may be provided by a thin strand when the yarn is used for the filament portion, or by other configurations such as winding or wrapping.

## Claims

1. An attachment member comprising a receiving portion having an insertion hole formed therein and including a locking portion, an inserting portion having an engaging portion to be inserted into the insertion hole of the receiving portion and engaging with the locking portion to establish a locking state, and a filament portion integrally connecting the receiving portion to the inserting portion, an IC chip being mounted in a portion of the attachment member, in which the attachment member includes a holding portion formed of a hard material along a portion of the filament portion, and the IC chip is mounted in the holding portion.

2. The attachment member according to claim 1, wherein the holding portion is formed closer to the receiving portion and integrally formed of the same material as that of the receiving portion.

3. The attachment member according to claim 1, wherein the holding portion is formed independently of the receiving portion and the inserting portion.

4. The attachment member according to any one of claims 1 to 3, wherein the filament portion has a core serving as an antenna and formed of a conductive material, the core being contained along an axial direction.

5. The attachment member according to claim 4, wherein an amorphous material is used for the core formed of the conductive material.

6. The attachment member according to claim 4 or 5, wherein the holding portion has a pressing portion formed on an outer edge to bring the IC chip, the antenna thereof closer to the core.

7. The attachment member according to claim 6, wherein the holding portion is provided with a holding piece for positioning the IC chip.

8. An attachment member comprising a base material formed of a hard material, a filament portion being coupled integrally to the base material, and a coupling portion formed of a hard material at an end of the filament, a target being able to be coupled to the coupling portion, wherein an IC chip is mounted on the base material or the coupling portion.

9. The attachment member according to claim 8, wherein the base member is provided by a T-shaped bar, a tag is coupled integrally to the coupling portion, and the IC chip is mounted on the coupling portion.

10. The attachment member according to claim 8, wherein the base member is a receiving portion having an insertion hole formed therein, the coupling portion is an inserting portion to be inserted and fixed into the insertion hole, the filament portion has continuously formed cones having a diameter gradually reduced toward the inserting portion, and the filament portion forms a loop, further comprising an attachment portion for attaching and fixing a base end of the tag in a portion of the receiving portion.

11. The attachment member according to claim 8, wherein the base member is a receiving portion having an insertion hole formed therein, the coupling portion is an inserting portion to be inserted and fixed into the insertion hole, the filament portion is a linear member made of plastic or nylon or metal, and the filament portion forms a loop.

12. The attachment member according to claim 8, wherein the base member is a receiving portion having an insertion hole formed therein, the coupling portion is an inserting portion to be inserted and fixed into the insertion hole, the filament portion is twisted yarn of fibers, and the filament forms a loop.

13. The attachment member according to claim 8, wherein the base member is a receiving portion having an insertion hole formed therein, the coupling portion is an inserting portion to be inserted and fixed into the insertion hole, the filament portion is an elastomer, and the filament portion forms a loop.

14. The attachment member according to claim 8, wherein the base member is a receiving portion having an insertion hole formed therein, the coupling portion is an inserting portion to be inserted and fixed into the insertion hole, the filament portion has a flexible chain form, and the filament portion forms a loop.

15. The attachment member according to claim 8, wherein a receiving portion having an insertion hole formed therein is placed generally in the center of the filament portion of the base member, the IC chip is mounted on the receiving portion, the coupling portion is an inserting portion provided at each end of the filament portion, the respective inserting portions form two loops, and the filament portion in the receiving portion serves as an antenna member placed to surround the position of the IC chip.

16. The attachment member according to claim 8, wherein the base member is a T-shaped bar, the coupling portion is a tag secured to one end of the filament portion, the IC chip is mounted on the tag, and an antenna member is placed to surround the IC chip.

17. The attachment member according to any one of claims 8 to 16, wherein an antenna member associated with the IC chip is embedded or stranded or wound in the filament portion.

18. An attachment tool on which an assembly of attachment members are placed in parallel at regular intervals on a runner member to be cuttable, the attachment tool sequentially attaching the attachment members to a target one by one, the attachment member including a receiving portion having an insertion hole formed therein and including a locking portion, an inserting portion having an engaging portion to be inserted into the insertion hole of the receiving portion and engaging with the locking portion to establish a locking state, and a filament portion integrally connecting the receiving portion to the inserting portion, an IC chip being mounted in a portion of the attachment member, in which the attachment member includes a holding portion formed of a hard material along a portion of the filament portion, and the IC chip is mounted in the holding portion, a reader/writer associated with the IC chip of the attachment member being provided for a portion of a body of the attachment tool, wherein an operation switch in response to trigger operation is placed, the reader/writer is connected electrically to an antenna, and the reader/writer is connected electrically to the switch.
